# EUROPEAN PATENT SPECIFICATION

(11) **EP 2 450 778 B1**
(45) Date of publication and mention of the grant of the patent: **17.04.2019**
(21) Application number: 10794094.2
(22) Date of filing: 28.06.2010
(51) Int. Cl.: G06F 3/041, G06F 3/044

(54) **COORDINATE INPUT DEVICE AND DISPLAY DEVICE HAVING COORDINATE INPUT FUNCTION**
KOORDINATENEINGABEVORRICHTUNG UND ANZEIGEVORRICHTUNG MIT KOORDINATENEINGABEFUNKTION
DISPOSITIF DE SAISIE DE COORDONNÉES ET AFFICHEUR À FONCTION DE SAISIE DE COORDONNÉES

(30) Priority: 30.06.2009 JP 2009154783
(43) Date of publication of application: 09.05.2012
(73) Proprietor: Kyocera Corporation, Kyoto-shi Kyoto 612-8501 (JP)
(72) Inventor: NAGATA, Yasunari, Shiga 520-2362 (JP)
(74) Representative: Viering, Jentschura & Partner mbB Patent- und Rechtsanwälte
(86) International application number: PCT/JP2010/060943
(87) International publication number: WO 2011/001925

(56) References cited:
- JP-A- 2006 011 523
- JP-A- 2006 179 274
- JP-T- 2007 533 044
- US-A1- 2004 239 650
- US-A1- 2008 309 633

## Description

### FIELD

The present invention relates to a coordinate input device, of which a touch panel is a typical example, that detects, as an input location, a point where a user performs an input operation on an input area in a predetermined plane and relates to a display apparatus with a coordinate input function that includes the coordinate input device.

### BACKGROUND

A coordinate input device includes multiple detection electrode patterns that each include multiple detection electrodes arranged with a space interposed therebetween in a matrix on a substrate (for example, Japanese Patent Application Laid-open No. 2008-310550).

In such a coordinate input device, however, an electrode is not formed between the detection electrodes. Therefore, there is a possibility that the optical translucency of the area between the detection electrodes is higher than the translucency of the area where the detection electrode is formed and that the optical reflectivity of the area between the detection electrodes is lower than the optical reflectivity of the area where the detection electrode is formed. Because of the difference in the optical translucency and reflectivity, the area between the detection electrodes at the input area of the coordinate input device is noticeable, which may cause a decrease in the display quality level of a product. This problem also occurs in devices other than capacitive coordinate input devices, i.e., resistive coordinate input devices that include a detection electrode for detecting the position of a finger, pen, or the like.

The present invention has been made for such a reason and has an object to improve the display quality level of a product.

US 2008/0309633 A1 discloses a substantially transparent mutual-capacitance touch sensor panel having sensors fabricated on a single side of a substrate for detecting multi-touch events. Substantially transparent row and column traces can be formed on the same side of the substrate, separated by a thin dielectric material, using diamond, rectangular, or hexagonal rows and columns. Dummy shapes of the same material as the row and column traces can be formed alongside the rows and columns to provide optical uniformity. The metal traces in the border areas used to route the rows to the short edge of the substrate can also be formed on the same side of the substrate as the rows and columns. The metal traces can allow both the rows and columns to be routed to the same short edge of the substrate so that a small flex circuit can be bonded to only one side of the substrate.

### SUMMARY

The present invention provides a coordinate input device as defined in claim 1, as well as a display apparatus with a coordinate input function as defined in claim 11 . Further embodiments of the coordinate input device of the present invention are described in dependent claims 2 to 10. Thus, according to an embodiment of the present invention, a coordinate input device includes a translucent substrate; a detection electrode pattern that includes a plurality of detection electrodes for detecting an input location and in which the detection electrodes are arranged on or above the translucent substrate in at least one direction; and an adjustment pattern that is formed between the detection electrodes in a planar view, that is electrically insulated from the detection electrodes, and that includes the same material as the detection electrodes, wherein the adjustment pattern is located on the same level as the plurality of detection electrodes.

### BRIEF DESCRIPTION OF DRAWINGS

FIG. 1 is a plan view that illustrates a coordinate input device according to a first embodiment of the present invention.
FIG. 2 is a cross-sectional view of the coordinate input device illustrated in FIG. 1; FIG. 2(a) is a cross-sectional view taken along Ib-Ib and FIG. 2(b) is a cross-sectional view taken along IIb-IIb.
FIG. 3 is a cross-sectional view of the coordinate input device illustrated in FIG. 1 taken along IIIb-IIIb.
FIG. 4 is a plan view that illustrates a conductive layer and an insulating layer of the coordinate input device illustrated in FIG. 1.
FIG. 5 is an enlarged plan view of the section R of FIG. 1.
FIG. 6 is a cross-sectional view that illustrates a display apparatus with a coordinate input function according to the embodiment of the present invention.
FIG. 7 is a perspective view that illustrates a liquid crystal display panel.
FIG. 8 is a plan view that illustrates a coordinate input device according to a second embodiment of the present invention.
FIG. 9 is a plan view that illustrates an insulating layer and a conductive layer of the coordinate input device illustrated in FIG. 8.
FIG. 10 is a cross-sectional view of the coordinate input device illustrated in FIG. 8 taken along IVb-IVb.
FIG. 11 is a plan view that illustrates a coordinate input device according to a third embodiment of the present invention.
FIG. 12(a) is an exploded plan view that illustrates the side of the substrate of the coordinate input device illustrated in FIG. 11, and FIG. 12(b) is an exploded plan view that illustrates the side of the protective substrate of the coordinate input device illustrated in FIG. 11.
FIG. 13 is a cross-sectional view that illustrates a display apparatus with a coordinate input function according to another embodiment of the present invention.
FIG. 14 is a cross-sectional view that illustrates a modified example of the coordinate input device illustrated in FIG. 10.
FIG. 15 is a plan view that illustrates a modified example of the coordinate input device illustrated in FIG. 5.

### DESCRIPTION OF EMBODIMENTS

### [First Embodiment]

First, an explanation is given of a capacitive coordinate input device X1 and a display apparatus Y with a coordinate input function according to a first embodiment of the present invention.

The coordinate input device X1 includes a substrate 10, a conductive layer 20, an insulating layer 30, a first detection electrode pattern 40, a second detection electrode pattern 50, an adjustment pattern 60, a joint member 70, and a protective substrate 80.

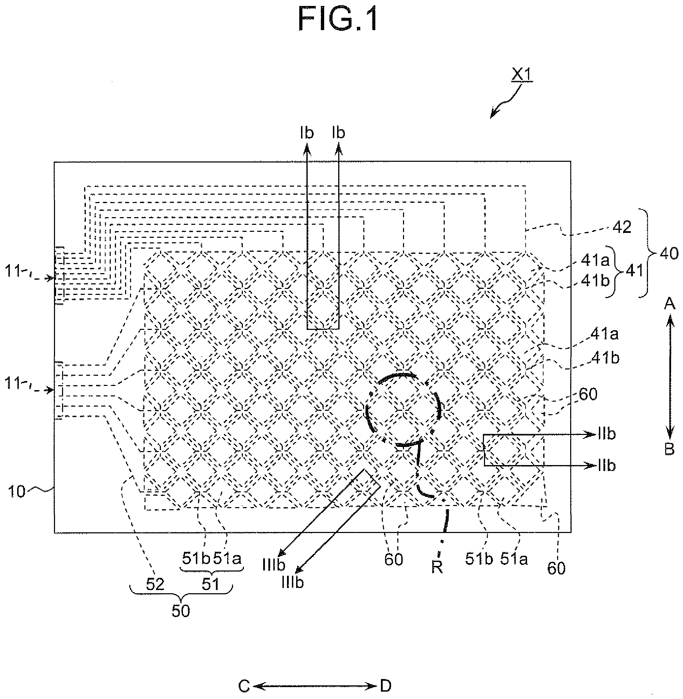

The substrate 10 has a function of supporting the conductive layer 20, the insulating layer 30, the first detection electrode pattern 40, the second detection electrode pattern 50, and the adjustment pattern 60. As illustrated in FIG. 1, an exemplary shape of the substrate 10 in a planar view is rectangular. The material of the substrate 10 has insulation properties and translucency and is, for example, glass or plastic. Here, the translucency means the transmittance of visible light. If glass is used as the material of the substrate 10, it is preferable that the thickness of the substrate 10 is set to be not less than 0.1 mm and not more than 1.0 mm so that sufficient shape stability is ensured and any change in capacitance is easily detected.

The conductive layer 20 is formed on or above substantially the entirety of one of the main surfaces of the substrate 10.

The conductive layer 20 includes shield electrodes 21 and second connection electrodes 22.

The shield electrode 21 has a function of reducing the effect of the noise due to, for example, drive signals of a display device, or the like, on first detection electrodes 41a and second detection electrodes 51a, which will be explained later. The shield electrode 21 is a continuous layer except for the area of the second connection electrode 22 and is set to the reference potential, such as the ground potential.

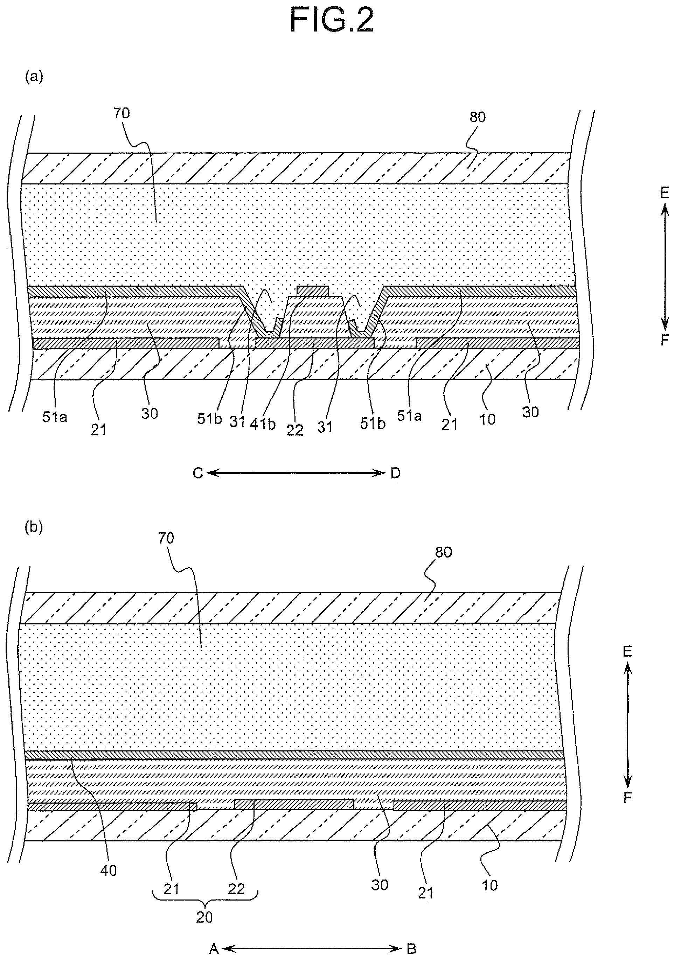

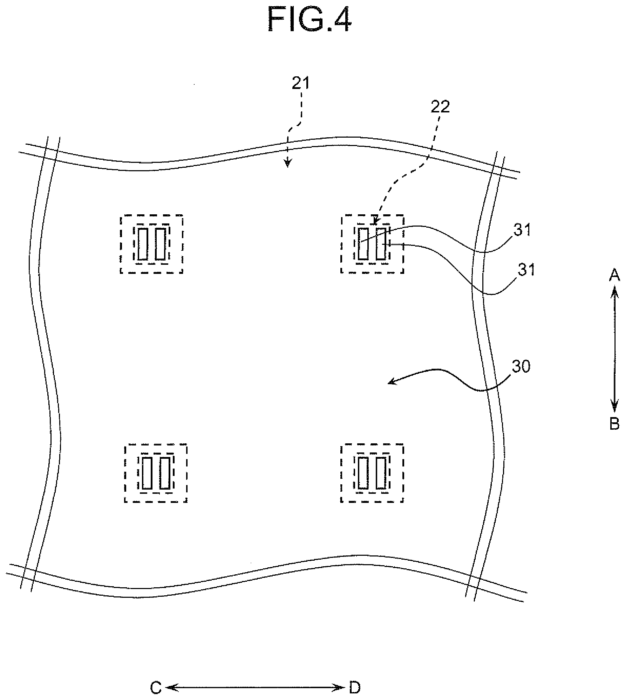

The second connection electrode 22 has a function of electrically connecting the adjacent second detection electrodes 51a. As illustrated in FIGS. 2(a), 2(b), and 4, the circumferential edge of the second connection electrode 22 is separated from the shield electrode 21 so that the second connection electrode 22 is electrically insulated from the shield electrode 21, and the second connection electrodes 22 are dotted like islands.

The material of the conductive layer 20 has translucency and conductive properties and is, for example, Indium Tin Oxide (ITO), Indium Zinc Oxide (IZO), Antimony Tin Oxide (ATO), Tin Oxide, Zinc Oxide, or the like.

The insulating layer 30 is formed on or above substantially the entirety of the conductive layer 20.

The insulating layer 30 has a function of insulating the shield electrode 21 from the first detection electrode pattern 40 and insulating the shield electrode 21 from the second detection electrode pattern 50.

Furthermore, the insulating layer 30 includes first through-holes 31. As illustrated in FIGS. 2(a) and 4, the first through-holes 31 are located at positions corresponding to both ends of the second connection electrode 22 in the insulating layer 30 and pass through the insulating layer 30 in the thickness direction thereof. The material of the insulating layer 30 has translucency and insulation properties and is, for example, a resin, such as an acrylic resin.

The first detection electrode patterns 40, the second detection electrode patterns 50, and the adjustment patterns 60 are formed on or above the insulating layer 30.

The first detection electrode pattern 40 includes first detection electrode arrays 41 and wiring conductors 42.

The first detection electrode array 41 includes the first detection electrodes 41a and first connection electrodes 41b. Furthermore, the first detection electrode array 41 is arranged in the direction of the arrow CD.

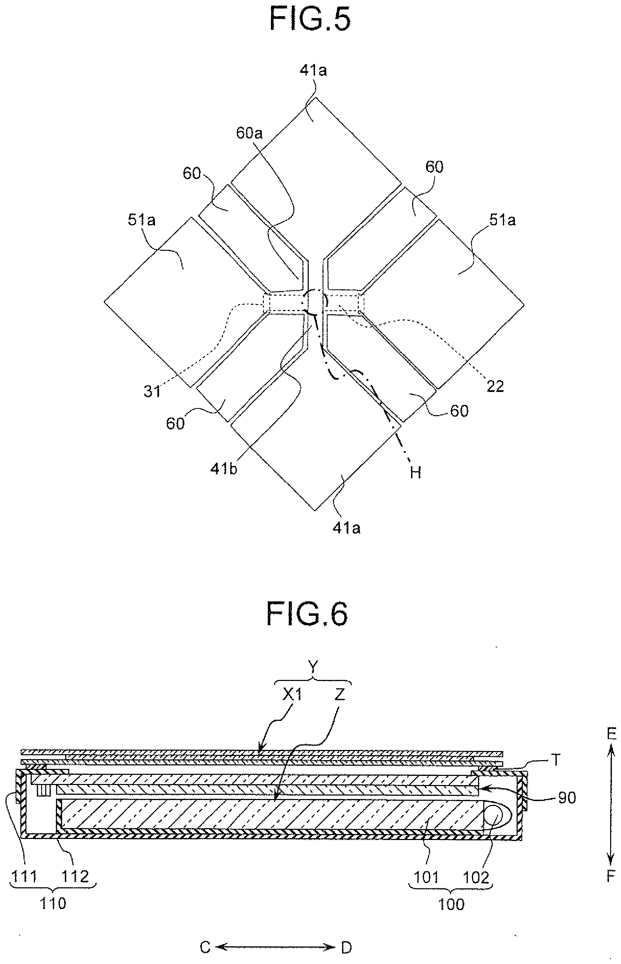

The first detection electrode 41a has a function of detecting, in the direction of the arrow CD, the position of a finger, or the like, that is located close to the input area. The first detection electrodes 41a are arranged with a space interposed therebetween in a matrix in the directions of the arrow AB and the arrow CD. The first detection electrodes 41a, which are adjacent to each other in the direction of the arrow AB, are electrically connected to each other via the first connection electrode 41b. As illustrated in FIGS. 1 and 5, the first detection electrode 41a according to the present embodiment has a diamond shape in a planar view; however, the shape of the first detection electrode 41a is not limited to this. The material of the first detection electrode 41a can be the same material as the conductive layer 20.

The first connection electrode 41b has a function of electrically connecting the adjacent first detection electrodes 41a. Furthermore, as illustrated in FIGS. 2(a) and 2(b), the first connection electrode 41b is opposed to the second connection electrode 22 with the insulating layer 30 interposed therebetween. In other words, as illustrated in FIG. 5, the first connection electrode 41b of the first detection electrode pattern 40 and the second connection electrode 22 of the second detection electrode pattern 50 have an intersection area H where the first connection electrode 41b intersects with the second connection electrode 22 in a planar view.

Moreover, the area of the first connection electrode 41b in a planar view is set to be smaller than that of the first detection electrode 41a in a planar view.

The material of the first connection electrode 41b can be the same material as the conductive layer 20.

The wiring conductor 42 has a function of applying a voltage to the first detection electrode 41a. As illustrated in FIG. 1, one end of the wiring conductor 42 is connected to the first detection electrode 41a, which is located on the end of the first detection electrode array 41, and the other end is positioned on an external conductive area 11. The wiring conductor 42 may be connected to both ends of the first detection electrode array 41. The material of the wiring conductor 42 has conductive properties and is, for example, a metal, such as aluminum, aluminum alloy, silver, or silver alloy.

The second detection electrode pattern 50 includes second detection electrode arrays 51 and wiring conductors 52.

The second detection electrode array 51 includes the second detection electrodes 51a and three-dimensional wires 51b. As illustrated in FIG. 1, the second detection electrode array 51 is arranged in the direction of the arrow AB.

The second detection electrode 51a has a function of detecting, in the direction of the arrow AB, the position of a finger, or the like, that is located close to the input area. Furthermore, the second detection electrodes 51a are arranged with a space interposed therebetween in a matrix in the directions of the arrow AB and the arrow CD. As illustrated in FIG. 2(a), the second detection electrodes 51a, which are adjacent to each other in the direction of the arrow CD, are electrically connected to each other via the second connection electrode 22 in the conductive layer 20. The second detection electrode 51a has a diamond shape in a planar view; however, the shape of the second detection electrode 51a is not limited to this.

The second detection electrode 51a is located near the first detection electrode 41a. This means that the detection electrodes are located, for example, 100 µm to 200 µm apart from each other when viewed in cross section. The material of the second detection electrode 51a can be the same material as the conductive layer 20.

The three-dimensional wire 51b has a function of electrically connecting the adjacent second detection electrodes 51a via the second connection electrode 22. As illustrated in FIG. 2(a), the three-dimensional wire 51b is located inside the first through-hole 31 of the insulating layer 30. The material of the three-dimensional wire 51b can be the same material as the conductive layer 20. The three-dimensional wire 51b may be formed together with the second detection electrode 51a or may be formed individually.

The wiring conductor 52 has a function of applying a voltage to the second detection electrode 51a. As illustrated in FIG. 1, one end of the wiring conductor 52 is connected to the second detection electrode 51a, which is located on the end of the second detection electrode array 51, and the other end is positioned on the external conductive area 11. The wiring conductor 52 may be connected to both ends of the second detection electrode array 51. The material of the wiring conductor 52 can be the same material as the wiring conductor 42.

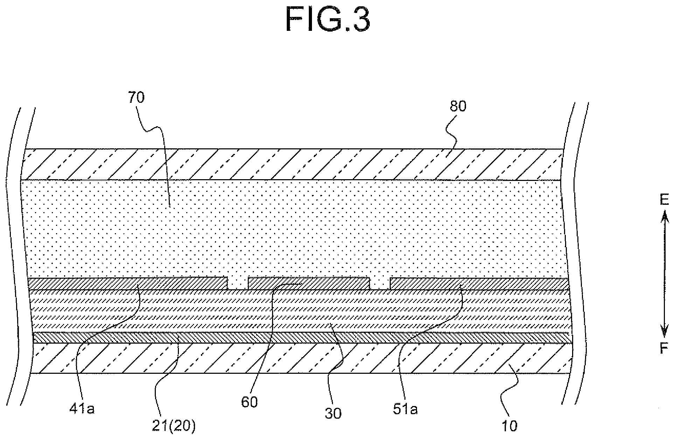

The adjustment pattern 60 is located on or above the insulating layer 30. As illustrated in FIGS. 1, 3, and 5, the adjustment pattern 60 is formed between the adjacent first detection electrodes 41a, between the adjacent second detection electrodes 51a, and between the adjacent first and second detection electrodes 41a, 51a. The adjustment pattern 60 includes the same material as the first detection electrode 41a and the second detection electrode 51a.

In the coordinate input device X1, the adjustment pattern 60 is formed, in a planar view, between the adjacent first detection electrodes 41a, between the adjacent second detection electrodes 51a, and between the adjacent first and second detection electrodes 41a, 51a. Thus, it is possible to reduce the difference in the visible light transmittance and reflectivity between the area where the first detection electrode pattern 40 or the second detection electrode pattern 50 is formed and the area where the first detection electrode pattern 40 or the second detection electrode pattern 50 is not formed. Hence, in the coordinate input device X1, the visible light transmittance and reflectivity can be more uniform for the input area, and the display quality level can be improved, for example, when the coordinate input device X1 is mounted on a display apparatus.

An explanation is given above of a case where the adjustment pattern 60 is formed between the adjacent first detection electrodes 41a, between the adjacent second detection electrodes 51a, and between the adjacent first and second detection electrodes 41a, 51a; however, the present invention is not limited to this. Specifically, the adjustment pattern 60 may be formed between the adjacent first detection electrodes 41a, between the adjacent second detection electrodes 51a, or between the adjacent first and second detection electrodes 41a, 51a.

It is preferable that the thickness of the adjustment pattern 60 is substantially the same as that of the first detection electrode 41a and the second detection electrode 51a, because the visible light transmittance and reflectivity can be more uniform. Here, substantially the same thickness means that the difference in the thickness is, for example, less than or equal to 10 µm.

Furthermore, it is more preferable that the adjustment pattern 60 has the same visible light transmittance and reflectivity as those of the first detection electrode 41a and the second detection electrode 51a. Here, the same visible light transmittance and reflectivity means that the difference between the visible light transmittance and reflectivity of the adjustment pattern 60 and the visible light transmittance and reflectivity of the first detection electrode 41a and the second detection electrode 51a is in the range of ± 10% of the visible light transmittance and reflectivity of the first detection electrode 41a and the second detection electrode 51a that are used as a reference.

As illustrated in FIG. 5, the adjustment pattern 60 has a sharp edge 60a whose width becomes narrower as it approaches the intersection area H of the first detection electrode pattern 40 and the second detection electrode pattern 50. Thus, it is possible to form the adjustment pattern 60 at a narrow area near the intersection area H and to locate the adjustment pattern 60 near the intersection area H of the first detection electrode pattern 40 and the second detection electrode pattern 50.

The adjustment pattern 60 is located on or above the insulating layer 30 on which the first detection electrode 41a and the second detection electrode 51a are formed. Thus, it is possible to form the adjustment pattern 60 at the same time the first detection electrode 41a and the second detection electrode 51a are formed, which is preferable because the productivity of the coordinate input device X1 is improved.

The joint member 70 has a function of attaching the protective substrate 80 to the insulating layer 30 on which the first detection electrode pattern 40 and the second detection electrode pattern 50 have been formed. The material of the joint member 70 can be, for example, an epoxy resin, and the like.

The protective substrate 80 has a function of preventing direct contact of the first detection electrode pattern 40 and the second detection electrode pattern 50 with an external object. Examples of the material of the protective substrate 80 include acrylic or glass, which has favorable transparency to visible light.

In the coordinate input device X1, a conductive body, such as a finger, is pressed against or located close to the protective substrate 80 so that the location where the conductive body is pressed against or located close to is detected as the input location. Specifically, if the conductive body is pressed against or located close to the input area, the capacitance obtained between the conductive body and the first and second detection electrodes 41a, 51a is changed. An undepicted driver detects the change in the capacitance. The driver detects the input location in accordance with the change in the capacitance. Thus, the coordinate input device X1 can detect the input location.

Next, an explanation is given of the display apparatus Y with a coordinate input function, which includes the coordinate input device X1.

As illustrated in FIG. 6, the display apparatus Y with a coordinate input function includes the coordinate input device X1 and a display device Z. Furthermore, the display device Z includes a liquid crystal display panel 90, a light source device 100, and a chassis 110.

The liquid crystal display panel 90 is arranged such that it is opposed to the first detection electrodes 41a, the second detection electrodes 51a, and the adjustment patterns 60 of the coordinate input device X1.

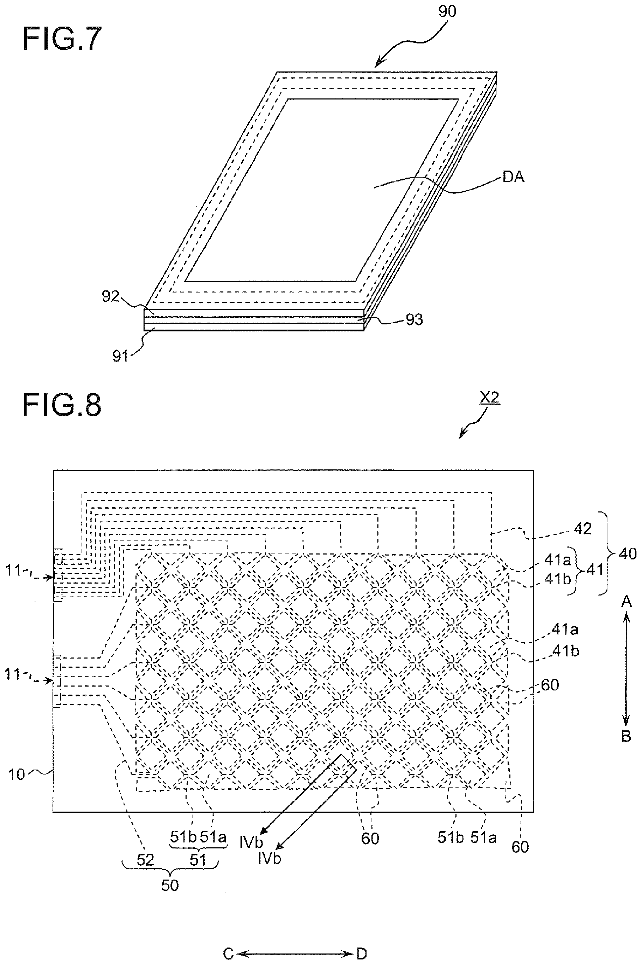

As illustrated in FIG. 7, the liquid crystal display panel 90 includes a first base 91, a second base 92, and a sealing member 93. A crystal liquid layer (not illustrated) is interposed between the first base 91 and the second base 92 and is sealed with the sealing member 93 so that a display area DA is formed that includes a plurality of pixels for displaying an image.

The light source device 100 has a function of emitting light toward the liquid crystal display panel 90 and is located under the liquid crystal display panel 90.

The chassis 110 is a member that contains the liquid crystal display panel 90 and the light source device 100. The chassis 110 includes an upper chassis 111 and a lower chassis 112. The material of the chassis 110 can be a resin, such as a polycarbonate resin, or a metal, such as stainless steel or aluminum.

The coordinate input device X1 is attached to the display device Z with a double-sided tape T. An attaching member that is used as a method of attaching the coordinate input device X1 to the display device Z is not limited to the double-sided tape T and may be an adhesive material, such as a thermo-setting resin or an ultraviolet curable resin, or a fixing structure that physically fixes the coordinate input device X1 to the display device Z.

The display apparatus Y with a coordinate input function according to the present invention includes the coordinate input device X1, as described above. Thus, the display quality level of a product can be improved.

### [Second Embodiment]

Next, an explanation is given, with reference to FIGS. 8 to 10, of a coordinate input device X2 according to a second embodiment of the present invention.

The coordinate input device X2 is different from the coordinate input device X1 in that an insulating layer 30A is used instead of the insulating layer 30. An explanation is omitted for the duplicate sections of the coordinate input device X1 and the coordinate input device X2.

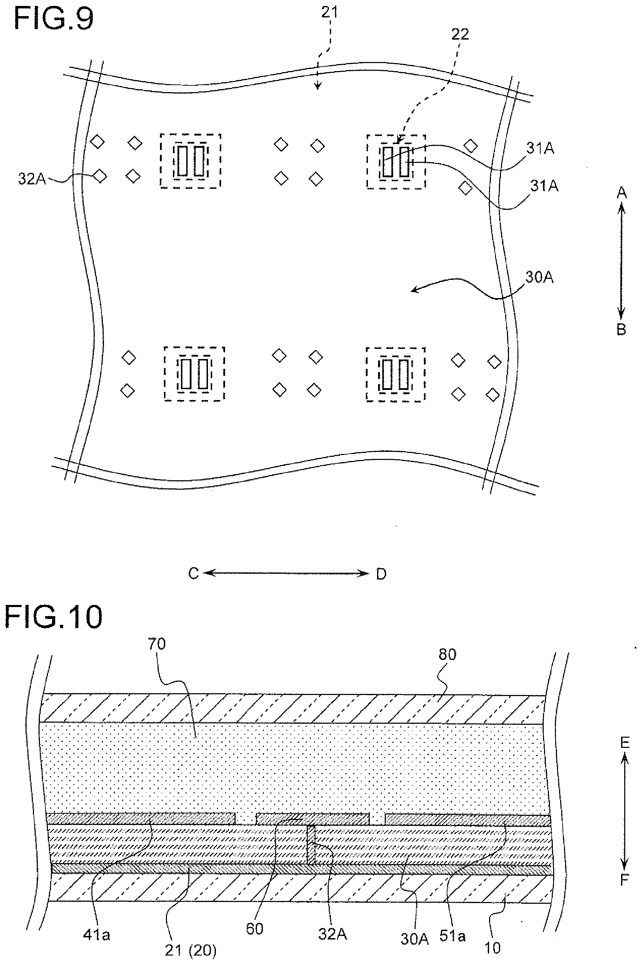

As illustrated in FIG. 9, the insulating layer 30A includes first through-holes 31A and second through-holes 32A. The first through-holes 31A are located at positions corresponding to both ends of the second connection electrode 22 in the insulating layer 30A and pass through the insulating layer 30A in the thickness direction thereof. As illustrated in FIG. 10, the second through-hole 32A is located at an area corresponding to the shield electrode 21 in the insulating layer 30A, and a conductive member is arranged, at least, on the inner wall surface of the second through-hole 32A.

As illustrated in FIG. 10, the adjustment pattern 60 is electrically connected to the shield electrode 21 via the conductive member of the second through-hole 32A in the insulating layer 30A. Specifically, the second through-hole 32A functions as a conduction through-hole. A method for electrically connecting the adjustment pattern 60 to the shield electrode 21 is not limited to the method using the conduction through-hole.

In the coordinate input device X2, the adjustment pattern 60 is electrically connected to the shield electrode 21 via the conductive member of the second through-hole 32A in the insulating layer 30A. Thus, it is possible to release the floating charge, which occurs between the first detection electrode 41a and the second detection electrode 51a, to the shield electrode 21 through the adjustment pattern 60. Hence, it is possible to improve the position detection sensitivity of the first detection electrode 41a and the second detection electrode 51a.

In the coordinate input device X2, the adjustment pattern 60 is located on or above the insulating layer 30A. Specifically, the adjustment pattern 60 is located on the same level as the first detection electrode 41a and the second detection electrode 51a so that the adjustment pattern 60 can be located closer to the first detection electrode 41a and the second detection electrode 51a; thus, it is possible to easily release the floating charge, which occurs between the first detection electrode 41a and the second detection electrode 51a, to the shield electrode 21 through the adjustment pattern 60.

The display apparatus Y with a coordinate input function may use the coordinate input device X2 instead of the coordinate input device X1.

### [Third Embodiment]

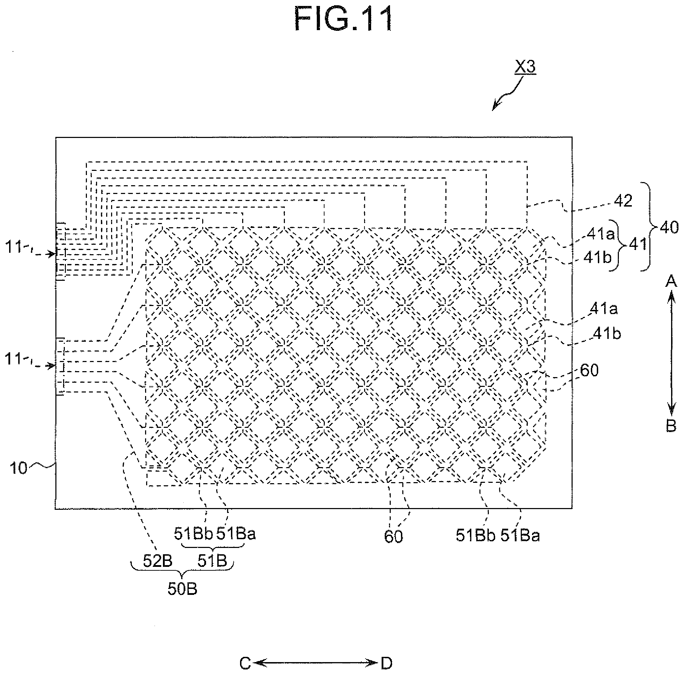

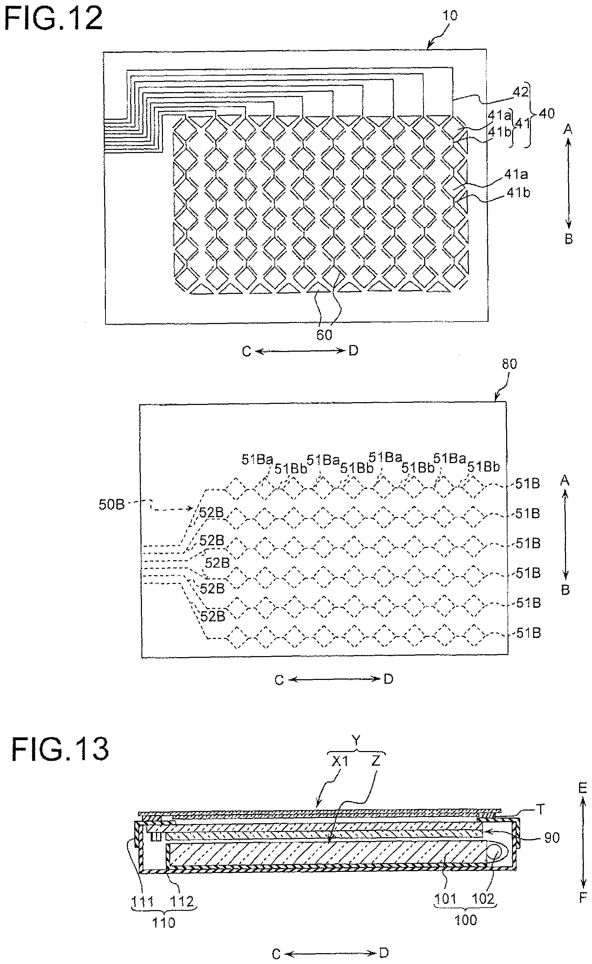

Next, an explanation is given, with reference to FIGS. 11 and 12, of a coordinate input device X3 according to a third embodiment of the present invention.

The coordinate input device X3 includes the substrate 10, the first detection electrode pattern 40, a second detection electrode pattern 50B, the adjustment pattern 60, the joint member 70, and the protective substrate 80. An explanation is omitted for the duplicate sections of the coordinate input device X1 and the coordinate input device X3.

As illustrated in FIG. 12(b), the second detection electrode pattern 50B includes second detection electrode arrays 51B and wiring conductors 52B and is formed on or above one of the main surfaces of the protective substrate 80. The second detection electrode array 51B includes second detection electrodes 51Ba and second connection electrodes 51Bb, and the second detection electrode array 51B is arranged in the direction of the arrow AB.

As illustrated in FIG. 11, in the coordinate input device X3, the substrate 10 is attached to the protective substrate 80 with the joint member 70 such that the first detection electrodes 41a are not overlapped with the second detection electrodes 51Ba in a planar view.

The adjustment pattern 60 is formed such that, when the substrate 10 is attached to the protective substrate 80, the adjustment pattern 60 is located between the first detection electrode 41a and the second detection electrode 51Ba in a planar view. The adjustment pattern 60 is formed on or above the substrate 10 according to the present embodiment; however, the adjustment pattern 60 may be formed on or above the protective substrate 80 or may be formed on or above both the substrate 10 and the protective substrate 80.

The coordinate input device X3 produces the same advantage as that described for the coordinate input device X1.

The display apparatus Y with a coordinate input function may use the coordinate input device X3 instead of the coordinate input device X1.

The specific embodiments of the present invention are described above; however, the present invention is not limited to these,

In the coordinate input devices X1, X2, the first connection electrode 41b is electrically insulated from the second connection electrode 22 because the first connection electrode 41b is opposed to the second connection electrode 22 via the insulating layer 30, 30A; however, the present invention is not limited to this, and a configuration may be appropriate if the connection electrodes are electrically insulated from each other, for example, by covering any one of the connection electrodes with an insulating layer.

Although the joint member 70 and the protective substrate 80 are provided in the coordinate input devices X1, X2, they may not be provided.

Although the shield electrode 21 is provided in the coordinate input devices X1, X2, it may not be provided.

In the coordinate input devices X1, X2, the conductive layer 20, the insulating layer 30, and the first detection electrode pattern 40 and the second detection electrode pattern 50 are laminated in this order on or above one of the main surfaces of the substrate 10; however, the first detection electrode pattern 40 and the second detection electrode pattern 50, the insulating layer 30, and the conductive layer 20 may be laminated in this order on or above one of the main surfaces of the substrate 10. In this case, as illustrated in FIG. 13, when one of the coordinate input devices X1, X2 is mounted on the display apparatus Y, the upper substrate of the display device Z may be used as a protective substrate.

In the coordinate input devices X1, X2, the adjustment pattern 60 is located away from the first detection electrode 41a and the second detection electrode 51a; however, the present invention is not limited to this, and a configuration may be appropriate if they are electrically insulated from each other. For example, the adjustment pattern 60 may be covered with an insulating layer.

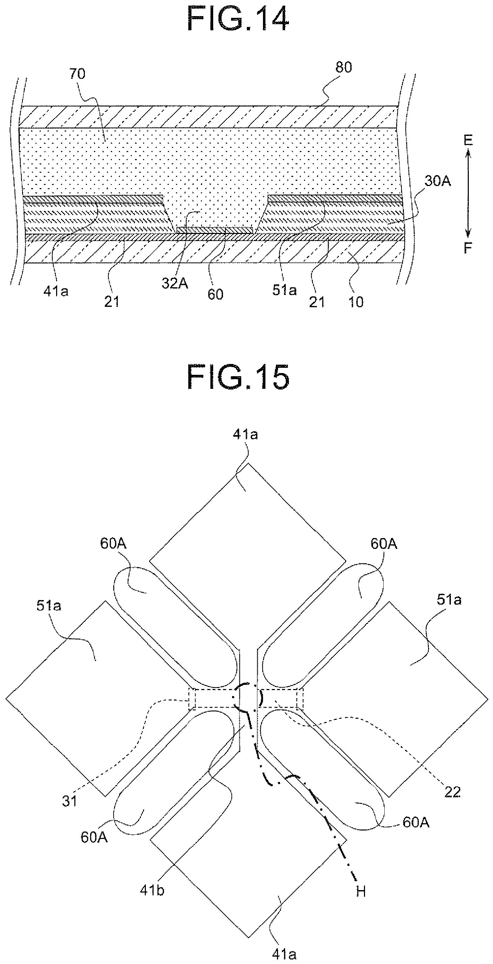

In the coordinate input device X2, the adjustment pattern 60 is electrically connected to the shield electrode 21 via the second through-hole 32A of the insulating layer 30A; however, as illustrated in FIG. 14, the adjustment pattern 60 may be directly formed on the shield electrode 21 within the second through-hole 32A.

The shield electrode 21 may be provided in the coordinate input device X3. It is preferable to provide the shield electrode 21 because it is possible to reduce the effect of noise, which occurs due to the drive signals of the display device, on the detection electrodes 41a, 51a.

In the coordinate input devices X1, X2, X3, an adjustment pattern 60A may be provided instead of the adjustment pattern 60 as illustrated in FIG. 15. Here, the adjustment pattern 60A has circular edges. This is preferable because the circular areas easily scatter transmitted light and reflected light and the adjustment pattern 60A is hardly visible.

Although the capacitive coordinate input device is explained as the coordinate input devices X1, X2, X3, the present invention is not limited to this. For example, the present invention may be also applied to a resistive coordinate input device.

Although an explanation is given of a case where the display panel of the display apparatus Y is the liquid crystal display panel 90, the present invention is not limited to this. Specifically, the display panel may be a CRT, plasma display, organic EL display, inorganic EL display, LED display, fluorescent display tube, field emission display, surface-conduction electron-emitter display, electronic paper, or the like.

### REFERENCE SIGNS LIST

X1, X2, X3 coordinate input device
Y display apparatus with a coordinate input function
Z display device
10 substrate
20 conductive layer
30, 30A insulating layer
40 first detection electrode pattern
50, 50B second detection electrode pattern
60, 60A adjustment pattern
70 joint member
80 protective substrate
90 liquid crystal display panel
100 light source device
110 chassis

## Claims

1. A coordinate input device comprising:
a translucent substrate (10);
a detection electrode pattern (40, 50, 50B) that includes a plurality of detection electrodes (41a, 51a, 51Ba) for detecting an input location, the detection electrodes being arranged on or above the translucent substrate in at least one direction; and
an adjustment pattern (60, 60A) that is formed between the detection electrodes in a planar view and is electrically insulated from the detection electrodes, the adjustment pattern including the same material as the detection electrodes, wherein
the detection electrode pattern includes a first detection electrode pattern (40) in which first detection electrodes (41a) are arranged in a first direction and a second detection electrode pattern (50, 50B) in which second detection electrodes (51a, 51Ba) are arranged in a second direction, and
the adjustment pattern is located on the same level as the plurality of detection electrodes, and in a planar view, between the adjacent first detection electrodes, between the adjacent second detection electrodes, and between the adjacent first and second detection electrodes, in an area where the first detection electrode pattern and the second detection electrode pattern are not formed.

2. The coordinate input device according to claim. 1, further comprising;
a conductive layer (20) that is set to the reference potential; and
an insulating layer(30, 30A), the conductive layer and the insulating layer being sequentially laminated on or above the translucent substrate, wherein
the detection electrodes and the adjustment pattern are located on or above the insulating layer, and
the adjustment pattern includes a conductive material and is electrically connected to the conductive layer.

3. The coordinate input device according to claim 2, wherein
the insulating layer has a conduction through-hole that passes through the insulating layer in the thickness direction thereof, and
the adjustment pattern and the conductive layer are connected to each other via the conduction through-hole.

4. The coordinate input device according to claim 1, further comprising;
a conductive layer (20) that is set to the reference potential; and
an insulating layer (30, 30A), the conductive layer and the insulating layer being sequentially laminated on or above the translucent substrate, wherein
the detection electrodes are located on or above the insulating layer, and
the adjustment pattern includes a conductive material and is located on or above the conductive layer.

5. The coordinate input device according to claim 4, wherein
the insulating layer has a through-hole that passes through the insulating layer in the thickness direction thereof, and
the adjustment pattern is formed on or above the conductive layer within the through-hole.

6. The coordinate input device according to claim 1, wherein the thickness of the adjustment pattern is substantially the same as that of the detection electrode.

7. The coordinate input device according to claim 1, wherein:
the adjustment pattern has the same optical translucency as that of the detection electrodes.

8. The coordinate input device according to claim 1, wherein:
the adjustment pattern has the same optical reflectivity as that of the detection electrodes.

9. The coordinate input device according to claim 1, wherein
the detection electrode pattern includes a first detection electrode pattern in which first detection electrodes are arranged in a first direction and a second detection electrode pattern in which second detection electrodes are arranged in a second direction,
the first detection electrode pattern and the second detection electrode pattern have an intersection area where the first and second detection electrode patterns intersect with each other, and
the adjustment pattern has a sharp edge that becomes narrow in a planar view as the adjustment pattern approaches the intersection area.

10. The coordinate input device according to claim 1, wherein the adjustment pattern has a circular edge in a planar view.

11. A display apparatus with a coordinate input function, comprising:
the coordinate input device (X1, X2, X3) according to claim 1; and
a display panel (90) that is opposed to the detection electrodes and the adjustment pattern of the coordinate input device.

## Patentansprüche

1. Eine Koordinateneingabevorrichtung, aufweisend:
ein lichtdurchlässiges Substrat (10),
ein Detektionselektrodenmuster (40, 50, 50B), das eine Mehrzahl von Detektionselektroden (41a, 51a, 51Ba) zum Detektieren einer Eingabestelle aufweist, wobei die Detektionselektroden auf oder über dem lichtdurchlässigen Substrat in mindestens einer Richtung angeordnet sind, und
ein Anpassungsmuster (60, 60A), das in einer Draufsicht zwischen den Detektionselektroden ausgebildet ist und von den Detektionselektroden elektrisch isoliert ist, wobei das Anpassungsmuster das gleiche Material wie die Detektionselektroden aufweist, wobei
das Detektionselektrodenmuster ein erstes Detektionselektrodenmuster (40), in dem erste Detektionselektroden (41a) in einer ersten Richtung angeordnet sind, und ein zweites Detektionselektrodenmuster (50, 50B) aufweist, in dem zweite Detektionselektroden (51a, 51Ba) in einer zweiten Richtung angeordnet sind, und
das Anpassungsmuster auf der gleichen Höhe wie die Mehrzahl von Detektionselektroden, und in einer Draufsicht zwischen den benachbarten ersten Detektionselektroden, zwischen den benachbarten zweiten Detektionselektroden, und zwischen den benachbarten ersten und zweiten Detektionselektroden in einem Bereich angeordnet ist, wo das erste Detektionselektrodenmuster und das zweite Detektionselektrodenmuster nicht ausgebildet sind.

2. Die Koordinateneingabevorrichtung gemäß Anspruch 1, ferner aufweisend:
eine leitfähige Schicht (20), die auf das Bezugspotential gesetzt ist, und
eine Isolierschicht (30, 30A), wobei die leitfähige Schicht und die Isolierschicht nacheinander auf oder über das lichtdurchlässige Substrat laminiert sind, wobei
die Detektionselektroden und das Anpassungsmuster auf oder über der Isolierschicht angeordnet sind, und
das Anpassungsmuster ein leitfähiges Material aufweist und elektrisch mit der leitfähigen Schicht verbunden ist.

3. Die Koordinateneingabevorrichtung gemäß Anspruch 2, wobei
die Isolierschicht ein Leitungsdurchgangsloch aufweist, das in der Dickenrichtung davon durch die Isolierschicht hindurchgeht, und
das Anpassungsmuster und die leitfähige Schicht über das Leitungsdurchgangsloch miteinander verbunden sind.

4. Die Koordinateneingabevorrichtung gemäß Anspruch 1, ferner aufweisend:
eine leitfähige Schicht (20), die auf das Bezugspotential gesetzt ist, und
eine Isolierschicht (30, 30A), wobei die leitfähige Schicht und die Isolierschicht nacheinander auf oder über das lichtdurchlässige Substrat laminiert sind, wobei
die Detektionselektroden auf oder über der Isolierschicht angeordnet sind, und
das Anpassungsmuster ein leitfähiges Material aufweist und auf oder über der leitfähigen Schicht angeordnet ist.

5. Die Koordinateneingabevorrichtung gemäß Anspruch 4, wobei
die Isolierschicht ein Durchgangsloch aufweist, das in der Dickenrichtung davon durch die Isolierschicht hindurchgeht, und
das Anpassungsmuster auf oder über der leitfähigen Schicht innerhalb des Durchgangslochs ausgebildet ist.

6. Die Koordinateneingabevorrichtung gemäß Anspruch 1, wobei die Dicke des Anpassungsmusters im Wesentlichen gleich wie diejenige der Detektionselektrode ist.

7. Die Koordinateneingabevorrichtung gemäß Anspruch 1, wobei:
das Anpassungsmuster die gleiche optische Transluzenz wie diejenige der Detektionselektroden hat.

8. Die Koordinateneingabevorrichtung gemäß Anspruch 1, wobei
das Anpassungsmuster das gleiche optische Reflexionsvermögen wie das der Detektionselektroden hat.

9. Die Koordinateneingabevorrichtung gemäß Anspruch 1, wobei
das Detektionselektrodenmuster ein erstes Detektionselektrodenmuster, in dem erste Detektionselektroden in einer ersten Richtung angeordnet sind, und ein zweites Detektionselektrodenmuster aufweist, in dem zweite Detektionselektroden in einer zweiten Richtung angeordnet sind,
das erste Detektionselektrodenmuster und das zweite Detektionselektrodenmuster einen Schnittbereich haben, wo das erste und das zweite Detektionselektrodenmuster sich schneiden, und
das Anpassungsmuster einen spitzen Rand hat, der in einer Draufsicht schmal wird, während sich das Anpassungsmuster dem Schnittbereich nähert.

10. Die Koordinateneingabevorrichtung gemäß Anspruch 1, wobei das Anpassungsmuster in einer Draufsicht einen runden Rand hat.

11. Eine Anzeigevorrichtung mit einer Koordinateneingabefunktion, aufweisend:
die Koordinateneingabevorrichtung (X1, X2, X3) gemäß Anspruch 1 und
ein Anzeigepanel (90), das den Detektionselektroden und dem Anpassungsmuster der Koordinateneingabevorrichtung gegenüberliegt.

## Revendications

1. Un dispositif de saisie de coordonnées, comprenant :
un substrat translucide (10),
un motif d'électrodes de détection (40, 50, 50B) comprenant une pluralité d'électrodes de détection (41a, 51a, 51Ba) pour détecter un endroit de saisie, les électrodes de détection étant agencées sur ou au-dessus du substrat translucide dans au moins une direction, et
un motif d'ajustement (60, 60A) qui est formé entre les électrodes de détection selon une vue en plan et qui est isolé électriquement par rapport aux électrodes de détection, le motif d'ajustement comprenant le même matériau que les électrodes de détection, dans lequel
le motif d'électrodes de détection comprend un premier motif d'électrodes de détection (40) dans lequel des premières électrodes de détection (41a) sont agencées dans une première direction et un deuxième motif d'électrodes de détection (50, 50B) dans lequel des deuxièmes électrodes de détection (51a, 51Ba) sont agencées dans une deuxième direction, et
le motif d'ajustement est situé au même niveau que la pluralité d'électrodes de détection et, selon une vue en plan, entre les premières électrodes de détection adjacentes, entre les deuxièmes électrodes de détection adjacentes, et entre les premières et deuxièmes électrodes adjacentes, dans une zone où le premier motif d'électrodes de détection et le deuxième motif d'électrodes de détection ne sont pas formés.

2. Le dispositif de saisie de coordonnées selon la revendication 1, comprenant en outre :
une couche conductrice (20) qui est mise au potentiel de référence, et
une couche isolante (30, 30A), la couche conductrice et la couche isolante étant laminées séquentiellement sur ou au-dessus du substrat translucide, où
les électrodes de détection et le motif d'ajustement sont situés sur ou au-dessus de la couche isolante, et
le motif d'ajustement comprend un matériau conducteur et est relié électriquement à la couche conductrice.

3. Le dispositif de saisie de coordonnées selon la revendication 2, dans lequel
la couche isolante présente un trou traversant de conduction qui passe à travers la couche isolante dans la direction d'épaisseur de celle-ci, et
le motif d'ajustement et la couche conductrice sont reliés l'un à l'autre moyennant le trou traversant de conduction.

4. Le dispositif de saisie de coordonnées selon la revendication 1, comprenant en outre :
une couche conductrice (20) qui est mise au potentiel de référence, et
une couche isolante (30, 30A), la couche conductrice et la couche isolante étant laminées séquentiellement sur ou au-dessus du substrat translucide, où
les électrodes de détection sont situées sur ou au-dessus de la couche isolante, et
le motif d'ajustement comprend un matériau conducteur et est situé sur ou au-dessus de la couche conductrice.

5. Le dispositif de saisie de coordonnées selon la revendication 4, dans lequel
la couche isolante présente un trou traversant qui passe à travers la couche isolante dans la direction d'épaisseur de celle-ci, et
le motif d'ajustement est formé sur ou au-dessus de la couche conductrice à l'intérieur du trou traversant.

6. Le dispositif de saisie de coordonnées selon la revendication 1, dans lequel l'épaisseur du motif d'ajustement est essentiellement la même que celle de l'électrode de détection.

7. Le dispositif de saisie de coordonnées selon la revendication 1, dans lequel :
le motif d'ajustement présente la même translucidité optique que celle des électrodes de détection.

8. Le dispositif de saisie de coordonnées selon la revendication 1, dans lequel :
le motif d'ajustement présente la même réflectivité que celle des électrodes de détection.

9. Le dispositif de saisie de coordonnées selon la revendication 1, dans lequel :
le motif d'électrodes de détection comprend un premier motif d'électrodes de détection dans lequel des premières électrodes de détection sont agencées dans une première direction et un deuxième motif d'électrodes de détection dans lequel des deuxièmes électrodes de détection sont agencées dans une deuxième direction,
le premier motif d'électrodes de détection et le deuxième motif d'électrodes de détection présentent une zone de détection où les premier et deuxième motifs d'électrodes de détection se croisent, et
le motif d'ajustement présente une arête vive qui devient étroite selon une vue en plan alors que le motif d'ajustement s'approche de la zone d'intersection.

10. Le dispositif de saisie de coordonnées selon la revendication 1, dans lequel le motif d'ajustement présente une arête circulaire selon une vue en plan.

11. Un appareil d'affichage avec une fonction de saisie de coordonnées, comprenant :
le dispositif de saisie de coordonnées (X1, X2, X3) selon la revendication 1, et
un panneau d'affichage (90) qui est opposé aux électrodes de détection et au motif d'ajustement du dispositif de saisie de coordonnées.
